# EUROPÄISCHE PATENTSCHRIFT

(11) **EP 3 607 824 B1**
(45) Veröffentlichungstag und Bekanntmachung des Hinweises auf die Patenterteilung: **22.09.2021**
(21) Anmeldenummer: 19189090.4
(22) Anmeldetag: 30.07.2019
(51) Int. Cl.: A22C 7/00, A22C 17/00

(54) **HERSTELLUNG VON SCHEIBENFÖRMIGEN FORMLINGEN**
PRODUCTION OF DISC-SHAPED BLANKS
FABRICATION DE PRODUITS MOULÉS EN FORME DE DISQUE

(30) Priorität: 06.08.2018 DE 102018119040
(43) Veröffentlichungstag der Anmeldung: 12.02.2020
(73) Patentinhaber: Heinrich Frey Maschinenbau GmbH, 89542 Herbrechtingen-Bolheim (DE)
(72) Erfinder: FREY, Heinrich, 89542 Herbrechtingen (DE); KRINK, Thomas, 89567 Sontheim/Brenz (DE)
(74) Vertreter: Manitz Finsterwald Patent- und Rechtsanwaltspartnerschaft mbB

(56) Entgegenhaltungen:
- EP-A2- 0 827 694
- DE-A1- 19 636 749
- DE-A1- 19 703 632

## Beschreibung

Die Erfindung betrifft ein Verfahren gemäß dem Oberbegriff des Anspruchs 1 sowie eine Vorrichtung zur Durchführung dieses Verfahrens mit den Merkmalen des Anspruchs 8, jeweils zur Herstellung von scheibenförmigen Formlingen aus Portionen einer zähfließenden Masse, bei dem jeweils die Masse einer Portion unter Druck zwischen zwei voneinander beabstandete Formflächen gefüllt wird. Außerdem betrifft die Erfindung gemäß Anspruch 13 eine Anlage zur Herstellung von scheibenförmigen Formlingen mit zumindest einer derartigen Vorrichtung. Derartige Verfahren und Vorrichtungen sind, soweit es den Oberbegriff des Anspruchs 1 anbetrifft, grundsätzlich bekannt, beispielsweise aus EP 0 827 694 und EP 1 273 236 B1.

Bei den Formlingen kann es sich beispielsweise um Hackfleischscheiben für Drehfleischspieße oder um Hamburger handeln. Der Rohstoff für die Formlinge, d.h. die Masse, aus der die Formlinge hergestellt werden, muss jedoch kein Fleisch sein oder Fleisch enthalten. Die Formlinge können auch aus einem fleischlosen oder veganen Rohstoff hergestellt werden. Die Masse kann ferner beispielsweise ein Teig sein, um z.B. Pizzaböden oder Böden für Kuchen herzustellen. Bei den Formlingen muss es sich auch nicht um Lebensmittelprodukte handeln, d.h. die Erfindung ist auch außerhalb des Lebensmittelbereiches einsetzbar.

Gleichwohl ist die Herstellung scheibenförmiger Formlinge beispielsweise in der Lebensmittelindustrie von Bedeutung. Immer wichtiger wird die automatische Produktion von Fleischformlingen für Drehfleischspieße, welche häufig auch dann als "Dönerspieße" oder "Dönerkebap-Spieße" bezeichnet werden, wenn die Scheiben aus Hackfleisch hergestellt werden.

Generell kommt es bei der Herstellung von scheibenförmigen Formlingen aus einer zähfließenden Masse neben einer hohen Produktionsrate vor allem darauf an, dass die Formlinge formstabil sind, eine reproduzierbare Qualität aufweisen und homogen ausgeformt sind. Problematisch hierbei ist insbesondere, dass mit zunehmendem Durchmesser der Formlinge auch die Neigung zu Rissbildung im Randbereich zunimmt.

Die Herstellung von geformten Scheiben aus Hackfleisch, die jeweils einen Durchmesser im Bereich von 100 bis 300 mm und eine Höhe im Bereich von 10 bis 50 mm aufweisen, hat man aktuell gut im Griff. Die bekannten Anlagen stoßen etwa alle zwei Sekunden eine Hackfleischscheibe mit einem Gewicht von ungefähr 500 g aus und können in einer 8 Stunden umfassenden Arbeitsschicht typischerweise zwischen etwa zwei und sechs Tonnen Hackfleischmasse verarbeiten.

Die Gastronomie verlangt allerdings zunehmend nach größeren Drehfleischspießen, bei denen der größte Durchmesser der Hackfleischscheiben mehr als die heute maschinell erreichbaren 300 mm beträgt. Gewünscht werden maximale Scheibendurchmesser von wenigstens 400 mm bei einer maximalen Scheibendicke von mehr als 50 mm. Derart große Scheiben können momentan nur von Hand geformt werden.

Aufgabe der Erfindung ist es daher, eine automatisierte Herstellung von Formlingen der eingangs genannten Art zu ermöglichen, die bei hoher Formstabilität, möglichst homogener Ausformung und reproduzierbarer Qualität einen möglichst großen Durchmesser aufweisen, wobei insbesondere ein Scheibendurchmesser von mehr als 300 mm bei einer Scheibendicke von mehr als 50 mm erzielbar sein soll.

Die Lösung dieser Aufgabe erfolgt durch die Merkmale der Ansprüche 1, 8 und 13.

Bei dem erfindungsgemäßen Verfahren wird während des Füllvorgangs der Abstand zwischen den Formflächen in Abhängigkeit von dem Fülldruck verändert.

Die erfindungsgemäße Vorrichtung umfasst zwei voneinander beabstandete Formflächen, die zum Verändern des Abstands zwischen den Formflächen relativ zueinander bewegbar sind, eine Zufuhreinrichtung, über welche jeweils die Masse einer Portion unter Druck zwischen die Formflächen gefüllt werden kann, eine Messeinrichtung zum Messen des Fülldrucks oder eines Maßes für den Fülldruck, und eine Steuereinrichtung, die dazu ausgebildet ist, während eines jeweiligen Füllvorgangs den Abstand zwischen den Formflächen in Abhängigkeit von dem Fülldruck zu verändern.

Bei der Erfindung wird folglich der Abstand zwischen den Formflächen nicht einfach auf einen bestimmten Wert eingestellt und dann während des Füllvorgangs unverändert beibehalten. Vielmehr wird erfindungsgemäß der Abstand zwischen den Formflächen in Abhängigkeit von dem Fülldruck verändert. Es wurde nämlich überraschend gefunden, dass auf diese Weise Formlinge mit sehr großen Durchmessern erzeugt werden können, ohne dass Einbußen bei deren Qualität hinzunehmen wären. Insbesondere hat sich gezeigt, dass selbst bei großen Durchmessern sich in den Randbereichen der Formlinge keine Risse bilden.

Es hat sich beispielsweise gezeigt, dass mit der Erfindung Scheiben aus zähfließendem Hackfleisch mit einem Portionsgewicht von bis zu 4 kg, einem Durchmesser von bis zu 400 mm und einer Höhe zwischen 10 mm und mehr als 50 mm bei einer Produktionsrate und einem Durchsatz hergestellt werden können, die eine höhere Leistung pro Arbeitsschicht als bisher ermöglichen.

Wenn im Rahmen dieser Offenbarung davon die Rede ist, dass der Abstand der Formflächen in Abhängigkeit von dem Fülldruck verändert wird oder veränderbar ist, dann ist darunter auch eine Veränderung oder Veränderbarkeit in Abhängigkeit von einem - wie auch immer bestimmten - Maß für den Fülldruck die Rede. Beispiele hierzu (z.B. Messung der Stromaufnahme eines elektrischen Antriebs oder Messung des an einem Antrieb wirksamen Drehmoments) sind an anderer Stelle erwähnt. Allgemein kann also der Fülldruck entweder durch eine direkte Methode oder durch eine indirekte Methode bestimmt werden.

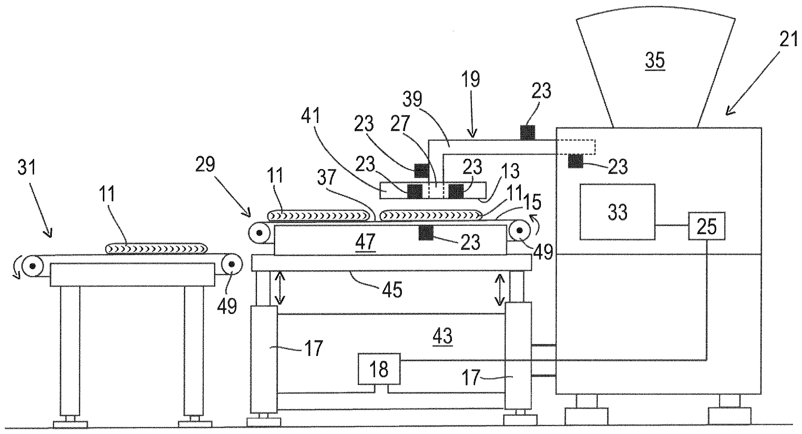

Vorteilhafte Ausführungsformen der Erfindung sind auch in den abhängigen Ansprüchen, der Beschreibung sowie der Zeichnung angegeben.

Bevorzugt wird der Abstand bis zum Erreichen einer jeweils gewünschten Scheibendicke vergrößert. Insbesondere wird der Abstand ausgehend von einem Wert, der kleiner ist als die jeweils gewünschte Scheibendicke, auf einen zumindest im Wesentlichen der jeweils gewünschten Scheibendicke entsprechenden Wert vergrößert. Der Ausgangswert kann beispielsweise 10 mm betragen.

Vorzugsweise handelt es sich bei dem erfindungsgemäßen Herstellungsverfahren um ein automatisiertes Verfahren, d.h. der Abstand wird automatisch verändert. Eine manuelle Veränderung des Abstands zwischen den Formflächen ist grundsätzlich möglich, allerdings nicht bei den erwähnten gewünschten Produktionsraten für die Dönerfleischscheiben.

Vorzugsweise ist vorgesehen, dass zum Verändern des Abstands die Formflächen mittels zumindest eines gesteuerten Antriebs relativ zueinander bewegt werden. Grundsätzlich ist es möglich, dass beide Formflächen bewegt werden. Vorzugsweise ist jedoch eine der Formflächen, insbesondere eine obere Formfläche, relativ zur Umgebung feststehend angeordnet, während die andere Formfläche mittels des gesteuerten Antriebs relativ zur feststehenden Formfläche bewegt wird. Vorzugsweise erfolgt die Abstandsveränderung während des Füllvorgangs im Rahmen einer Regelung, wobei in einem Regelkreis der Fülldruck oder ein Maß für den Fülldruck als Istwert gemessen, mit einem vorgegebenen Sollwert verglichen und durch Verändern des Abstands beeinflusst wird.

Beim Zuführen und Einfüllen einer unter Druck stehenden zähfließenden Masse wie z.B. Hackfleisch in den von den beiden Formflächen begrenzten Zwischenraum ist grundsätzlich ein Füllwiderstand zu überwinden, der von den jeweiligen Gegebenheiten und den jeweils gewünschten Eigenschaften wie insbesondere Größe und Gewicht des Formlings abhängig ist. Der Füllwiderstand beeinflusst nicht nur das Fließverhalten der Masse und damit wesentliche Eigenschaften des entstehenden Formlings, sondern sorgt auch für Krafteinwirkungen auf die am Füllvorgang beteiligten Komponenten der Vorrichtung. Diese während des Füllvorgangs auftretenden Kräfte können direkt oder indirekt als Fülldruck oder als Maß für den Fülldruck gemessen und für eine Regelung verwendet werden, bei welcher der Abstand zwischen den Formflächen den Fülldruck in einer jeweils vorgegebenen Weis beeinflusst.

Derjenige Zusammenhang zwischen Fülldruck und Abstand, welcher zu den jeweils gewünschten Eigenschaften des herzustellenden Formlings führt, kann von unterschiedlichen Faktoren abhängig sein. Relevante Faktoren können z.B. Eigenschaften der Masse selbst sein, beispielsweise deren Fließfähigkeit, die zudem von der Umgebungstemperatur und der jeweiligen Rezeptur abhängig sein kann. Weitere Faktoren können der gewünschte Durchmesser des Formlings und die gewünschte Dicke des Formlings sein.

Die Regelung kann erfindungsgemäß beispielsweise derart erfolgen, dass während des Füllvorgangs der Fülldruck auf einem konstanten vorgegebenen Sollwert gehalten werden soll. Alternativ kann die Vorgabe für den Fülldruck mit dem Abstand zwischen den Formflächen und somit der momentanen Höhe des im Entstehen befindlichen Formlings variieren. Der durch die Regelung einzustellende Fülldruck kann alternativ oder zusätzlich eine Funktion des bereits zwischen die Formflächen gefüllten Teils der jeweiligen Portionsmasse sein.

Der Fülldruck oder ein Maß für den Fülldruck kann beispielsweise an einer der Formflächen, an einem Antrieb für eine der Formflächen, an einer Zufuhreinrichtung für die Masse und/oder an einer Fülleinrichtung für die Masse gemessen werden. Wenn die Masse beispielsweise über ein Füllrohr zwischen die Formflächen gebracht, dann kann z.B. ein Drucksensor in dem Füllrohr bzw. an einer Innenwand des Füllrohrs angeordnet sein, um auf diese Weise den Fülldruck zu messen.

Alternativ oder zusätzlich kann dann, wenn zum Bewegen einer der Formflächen ein elektrischer Antrieb verwendet wird, der Umstand ausgenutzt werden, dass der Antrieb auch dem Fülldruck entgegenwirken muss. Eine hierdurch bedingte erhöhte Stromaufnahme des Antriebs kann erfasst und als ein Maß für den Fülldruck verwendet werden. Die allgemeine Grundidee besteht hier also darin, eine durch den Fülldruck verursachte Belastung des Antriebs als ein Maß für den Fülldruck zu verwenden. Anstelle der Stromaufnahme kann z.B. an einer dafür geeigneten Stelle eine Drehmomentabfrage erfolgen, um auf diese Weise ein Maß für den Fülldruck zu erhalten.

Ein Maß für den Fülldruck kann auch auf andere Art und Weise bestimmt werden, d.h. unabhängig von einem Antrieb für eine der Formflächen.

Ein oder mehrere Drucksensoren können beispielsweise auch in eine oder beide Formflächen integriert werden.

Ein im Rahmen der Regelung verwendeter Sollwert für den Fülldruck kann während des Füllvorgangs konstant sein oder in Abhängigkeit von dem momentanen Abstand zwischen den Formflächen, von der momentan bereits zwischen die Formflächen geförderten Füllmenge und/oder von der momentan bereits verstrichenen Füllzeit des jeweiligen Füllvorgangs variieren.

Des Weiteren kann vorgesehen sein, dass der Abstand zwischen den Formflächen nach Erreichen einer jeweils gewünschten Scheibendicke weiter vergrößert wird. Eine damit verbundene Weiterbewegung zumindest einer der Formflächen kann für einen Abtransport des jeweiligen Formlings oder zur Vorbereitung oder Einleitung einer Abtransportbewegung genutzt werden.

Vorzugsweise wird während des Füllvorgangs eine untere Formfläche relativ zu einer oberen, insbesondere feststehenden, Formfläche bewegt und nach Erreichen einer jeweils gewünschten Scheibendicke auf ein Abtransportniveau abgesenkt. Die Formlinge können daraufhin an eine nachgeordnete Abtransporteinrichtung übergeben bzw. von einer Abtransporteinrichtung übernommen werden.

Vorzugsweise ist vorgesehen, dass zumindest ein die Scheiben betreffender Parameter, insbesondere die Scheibendicke, der Scheibendurchmesser oder das Scheibengewicht, und/oder zumindest ein das Verändern des Abstands betreffender Parameter aus einem Speicher und/oder aus einer Steuereinrichtung abgerufen wird.

Hierdurch ist es möglich, dass bei der Produktion automatisch auf z.B. in der Steuerung zuvor hinterlegte Daten zugegriffen wird, um beispielsweise den Abstand in einer vorgegebenen Weise zu verändern. Die Steuerung kann also entsprechend der für eine jeweilige Anwendung gewünschten Scheiben programmiert werden.

Auf diese Weise können auch Abfolgen aus mehreren Scheiben vorgegeben werden, die sich zumindest teilweise voneinander unterscheiden. Insbesondere können aus einer Abfolge von Scheiben herzustellende Gesamtgebilde programmiert werden, z.B. die bekannten, konusförmigen Dönerspieße aus Hackfleischscheiben, deren Durchmesser kontinuierlich von oben nach unten abnimmt. Dabei kann auch die Scheibendicke je nach Bedarf vorgegeben werden, um z.B. auch zu berücksichtigen, dass in einem fertigen Gesamtgebilde wie beispielsweise einem Dönerspieß die unteren Scheiben aufgrund des Gewichts der darüber liegenden Scheiben zusammengedrückt werden.

Auch vor diesem Hintergrund kann in einem Ausführungsbeispiel der Erfindung vorgesehen sein, dass zumindest ein die Scheiben betreffender Parameter, insbesondere die Scheibendicke, der Scheibendurchmesser oder das Scheibengewicht, und/oder zumindest ein das Verändern des Abstands betreffender Parameter variiert wird. Auf diese Weise können unterschiedliche Formlinge hergestellt werden, beispielsweise Formlinge variabler Höhe und/oder variablen Durchmessers.

Gemäß einer weiteren Ausführungsform wird eine Abfolge von Scheiben hergestellt, von der sich zumindest zwei Scheiben hinsichtlich wenigstens eines Parameters voneinander unterscheiden. Insbesondere können die Scheiben der Abfolge zur Bildung eines Drehfleischspießes oder eines anderen Gesamtgebildes hergestellt werden, in welchem sich, bevorzugt unmittelbar, aufeinander folgende Scheiben hinsichtlich des Scheibendurchmessers und/oder der Scheibendicke voneinander unterscheiden. Dabei kann die Abfolge zumindest hinsichtlich eines jeweiligen Parameters frei vorab konfiguriert werden.

Die erfindungsgemäße Vorrichtung ist insbesondere dazu ausgebildet, das erfindungsgemäße Verfahren durchzuführen.

Bei der erfindungsgemäßen Vorrichtung ist vorzugsweise vorgesehen, dass wenigstens eine der Formflächen zumindest eine Füllöffnung aufweist, über welche die Zufuhreinrichtung mit dem Zwischenraum zwischen den Formflächen in Verbindung steht. Beispielsweise kann eine feststehende, horizontal ausgerichtete Füllplatte, deren nach unten weisende Seite als obere Formfläche dient, mit einer z.B. zentral angeordneten Füllöffnung versehen sein, an die ein als Zufuhreinrichtung dienendes Füllrohr angeschlossen ist, dessen anderes Ende mit einer Füllmaschine, insbesondere einer Vakuumfüllmaschine, verbunden ist, beispielsweise einer Kolbenfüllmaschine oder einer Flügelzellenfüllmaschine. Derartige Füllmaschinen sind dem Fachmann grundsätzlich bekannt und werden z.B. bei der Wurstherstellung zum Befüllen von Därmen mit portionsweise ausgegebener Wurstmasse eingesetzt.

Die Messeinrichtung zum Messen des Fülldrucks kann beispielsweise an einer der Formflächen angeordnet sein. Alternativ oder zusätzlich kann die Messeinrichtung an der Zufuhreinrichtung angeordnet sein, beispielsweise an oder in einem als Zufuhreinrichtung dienenden Füllrohr.

Alternativ oder zusätzlich kann zumindest eine der Formflächen mittels eines elektrischen Antriebs verfahrbar sein, wobei die Messeinrichtung dem Antrieb oder einer Steuerung des Antriebs zugeordnet ist. Wie vorstehend bereits erwähnt, kann hierbei zum Beispiel eine erhöhte Stromaufnahme des Antriebs oder eine andere Wirkung einer direkt oder indirekt durch den Fülldruck verursachten Belastung eines grundsätzlich beliebig ausgebildeten Antriebs als ein Maß für den Fülldruck erfasst werden.

Der Abstand zwischen den Formflächen kann ausgehend von einem Wert vergrößerbar sein, der kleiner ist als die jeweils gewünschte Scheibendicke.

Des Weiteren kann vorgesehen sein, dass der Abstand zwischen den Formflächen auf einen Wert vergrößerbar ist, der größer als die jeweils gewünschte Scheibendicke ist. Insbesondere kann es sich hierbei um einen Wert handeln, der mehr als 30 mm, bevorzugt mehr als 40 mm und insbesondere bevorzugt mehr als 50 mm beträgt. Dieser Wert ist vorzugsweise frei definierbar, kann also von einem Benutzer in Abhängigkeit von der jeweiligen Anwendung z.B. in der Steuerung hinterlegt werden.

Wie ebenfalls vorstehend bereits erwähnt, kann eine obere Formfläche feststehend und eine untere Formfläche relativ zu der oberen Formfläche absenkbar und anhebbar sein.

Eine untere Formfläche kann als eine Auflage ausgebildet sein, auf welche jeweils während des Füllvorgangs die Masse und nach dem Füllvorgang der Formling aufliegt.

Vorzugsweise ist eine untere Formfläche von einer Fördereinrichtung gebildet, mit der nach dem Füllvorgang der Formling an eine nachgeschaltete Einrichtung übergeben werden kann. Vorzugsweise handelt es sich bei der Fördereinrichtung um ein Förderband.

Des Weiteren ist bevorzugt vorgesehen, dass zum Trennen der Formlinge von der einen Formfläche und/oder von der anderen Formfläche ein Trennwerkzeug vorgesehen ist. Dieses Trennwerkzeug ist insbesondere derart ausgestaltet, dass durch eine Relativbewegung zwischen Formfläche und Trennwerkzeug ein Abtrennen des Formlings von der Formfläche erfolgt. Bei dem Trennwerkzeug kann es sich beispielsweise um ein Messer, einen Draht, einen Spachtel oder eine Klinge handeln. Das Trennwerkzeug kann mittels eines Antriebs relativ zu der Formfläche verstellbar sein.

Die Erfindung betrifft außerdem eine Anlage zur Herstellung von scheibenförmigen Formlingen aus Portionen einer zähfließenden Masse, insbesondere von Hackfleischscheiben für Drehfleischspieße, wobei die Anlage zumindest eine Vorrichtung der hierin offenbarten Art und wenigstens eine Ausgabeeinrichtung zum, insbesondere portionsweisen, Ausgeben der Masse umfasst.

Wie bereits vorstehend erwähnt, kann es sich bei der Füllmaschine um eine solche handeln, wie sie bei der Wurstherstellung zum Befüllen von Därmen eingesetzt wird, z.B. um eine Flügelzellenfüllmaschine oder eine Kolbenfüllmaschine.

Die Erfindung wird im Folgenden beispielhaft unter Bezugnahme auf die Zeichnung beschrieben, deren einzige Figur schematisch eine Seitenansicht einer erfindungsgemäßen Anlage mit einer erfindungsgemäßen Vorrichtung zeigt, die nach dem erfindungsgemäßen Verfahren betrieben werden kann.

Die dargestellte erfindungsgemäße Anlage umfasst eine als Ausgabeeinrichtung für die Hackfleischportionen dienende Füllmaschine 21. Der Rohstoff, in diesem Ausführungsbeispiel also die Hackfleischmasse, wird über einen Einfülltrichter 35 zugeführt. Die Maschine besitzt eine Bedieneinheit 33, beispielsweise in Form eines Touchscreens, sowie eine Steuereinrichtung 25, die gleichzeitig als zentrale Steuereinrichtung für die Gesamtanlage dient. Die Steuereinrichtung 25 ermöglicht es einem Benutzer, z.B. über die Bedieneinheit die herzustellenden Scheiben zu konfigurieren. Insbesondere kann dabei eine Abfolge von Scheiben vorgegeben werden, aus denen ein gesamter Drehfleischspieß gebildet werden soll. Hierdurch lassen sich folglich komplette Drehfleischspieße oder andere Gesamtgebilde aus mehreren, zumindest teilweise unterschiedlichen Scheiben vorprogrammieren, woraufhin die Anlage automatisch die benötigten, die vorgegebenen Eigenschaften wie Dicke, Durchmesser und Gewicht aufweisenden Scheiben in der vorgegebenen Reihenfolge produziert. Hierbei ist zu berücksichtigen, dass sich durch Vorgabe von Portionsgewicht und Dicke der Durchmesser automatisch ergibt und nicht separat vorgegeben zu werden braucht. Alternativ ist es möglich, den Scheibendurchmesser vorzugeben, aus dem die Steuereinrichtung 25 unter Berücksichtigung der ebenfalls vorgegebenen Scheibendicke das jeweils benötigte Portionsgewicht berechnet.

Der weitere Aufbau und die Funktionsweise einer solchen, insbesondere durch Unterdruck unterstützten und in diesem Fall dann auch als Vakuumfüllmaschine bezeichneten, Füllmaschine sind dem Fachmann grundsätzlich bekannt, weshalb hierauf nicht näher eingegangen zu werden braucht.

Die Portionen, die in einem bevorzugten Ausführungsbeispiel jeweils eine Masse bis zu 4 kg umfassen können, werden von der Füllmaschine 21 jeweils an einen in diesem Ausführungsbeispiel feststehenden, nicht in der Höhe verstellbaren Füllkopf ausgegeben, der eine Zufuhreinrichtung 19 sowie eine Füllplatte 41 umfasst. Die Zufuhreinrichtung 19 umfasst ein abgewinkeltes Füllrohr 39, das eintrittsseitig mit einem Ausgabebereich der Füllmaschine 21 verbunden und austrittsseitig an die Füllplatte 41 angeschlossen ist, und zwar im Bereich einer zentralen Füllöffnung 27, die in der Füllplatte 41 ausgebildet ist und sich senkrecht zur Plattenebene von der Oberseite der Füllplatte 41 durch die gesamte Füllplatte 41 hindurch bis zur Unterseite der Füllplatte 41 erstreckt.

Die beispielsweise aus Kunststoff oder aus Edelstahl hergestellte Füllplatte 41 kann in einer nicht dargestellten Draufsicht eine quadratische, eine rechteckige oder eine kreisförmige Gestalt besitzen. Eine zentrale Anordnung der Füllöffnung 27 in der Füllplatte 41 ist nicht zwingend. Die Füllöffnung 27 kann grundsätzlich auch exzentrisch in der Füllplatte 41 ausgebildet sein.

Die Unterseite der horizontal ausgerichteten Füllplatte 41 ist mit hoher Präzision eben ausgeführt und dient als die obere Formfläche 13 zweier einen Zwischenraum begrenzenden Formflächen 13, 15. In dem Zwischenraum werden die scheibenförmigen Formlinge 11 gebildet, weshalb in den während eines Füllvorgangs eingenommenen Relativstellungen der Formflächen 13, 15 die Höhe dieses Zwischenraumes wesentlich kleiner ist als dessen seitliche Ausdehnung.

In die Füllplatte 41 ist zudem ein nicht dargestelltes, beispielsweise pneumatisch angetriebenes Messer integriert, welches dazu dient, fertige Formlinge 11 von der Unterseite der Füllplatte 41, also von der oberen Formfläche 13, zu trennen. Hierauf wird nachstehend näher eingegangen.

Die der oberen Formfläche 13 mit Abstand gegenüberliegende untere Formfläche 15 wird von der Oberseite des oberen Trums 37 eines Endlosförderbandes 29 gebildet, das gleichzeitig als Fördereinrichtung 29 zum Abtransportieren fertiger Formlinge 11 dient.

Das die untere Formfläche 15 bereitstellende Förderband 29 ruht auf einem Hubtisch 45, der an einer auf dem Boden abgestützten, zusammen mit dem Hubtisch eine Hubeinheit bildenden Basis 43 abgestützt und relativ zur Basis 43 in der Höhe verstellbar ist, wie dies in der Figur durch die beiden Doppelpfeile angedeutet ist. Der konkrete Aufbau und die konkrete Funktionsweise der Hubeinheit sind nicht dargestellt und grundsätzlich beliebig. In Abhängigkeit von den jeweiligen Anforderungen ist insbesondere der Antrieb 17 für die Höhenverstellung des Hubtisches 45 derart ausgebildet, dass die während des Betriebs auftretenden Kräfte aufgenommen werden können und im Falle mehrerer Antriebseinheiten 17 (in der Figur sind beispielhaft zwei an gegenüberliegenden Enden der Hubeinheit angeordnete Antriebseinheiten 17 dargestellt) diese mit hoher Genauigkeit synchron betrieben werden können, um ein Verkanten oder Verkippen des Hubtisches 45 beim Anheben und Absenken zu vermeiden.

Eine für die Antriebseinheiten 17 vorgesehene Steuerung 18 der Hubeinheit ist mit der in der Füllmaschine 21 befindlichen zentralen Steuereinrichtung 25 verbunden und kann alternativ in die zentrale Steuereinrichtung 25 integriert sein. Wie in der Figur schematisch dargestellt, kann die Füllmaschine 21 mit der Hubeinheit im Bereich von deren Basis 43 mechanisch gekoppelt sein.

Wie nachstehend näher erläutert wird, erfolgt die Höhenverstellung des Hubtisches 45 und damit eine Änderung des Abstands zwischen den beiden Formflächen 13, 15 in Abhängigkeit von dem Fülldruck, der aufgrund des Füllwiderstandes entsteht, wenn die Hackfleischmasse durch die in der Füllplatte 41 ausgebildete Füllöffnung 27 hindurch in den Zwischenraum zwischen den beiden Formflächen 13, 15 gedrückt wird. Die erfindungsgemäße Anlage zeichnet nun dadurch aus, dass dieser Fülldruck gemessen wird und als Istgröße in eine Regelung eingeht, bei der mittels der zentralen Steuereinrichtung 25 sowie der Steuerung 18 für den Antrieb 17 der Hubeinheit der Fülldruck durch Verändern des Abstands zwischen den beiden Formflächen 13, 15 beeinflusst wird. Dies erfolgt entsprechend eines jeweiligen Sollverhaltens, das in grundsätzlich beliebiger Weise und insbesondere in Abhängigkeit von der jeweiligen Anwendung und den jeweiligen Gegebenheiten vorgegeben und beispielsweise von einem Bediener an der Bedieneinheit 33 ausgewählt werden kann.

Das Erfassen des Fülldrucks erfolgt durch eine Messeinrichtung 23, die einen oder mehrere Drucksensoren 23 umfasst. Vorzugsweise ist an genau einer Messstelle genau ein Drucksensor vorhanden, um auf diese Weise die Messung sowie die darauf basierende Regelung so einfach wie möglich zu halten. Es ist aber auch möglich, an einer Messstelle mehrere Drucksensoren vorzusehen. Grundsätzlich ist es auch möglich, die Fülldruckmessung gleichzeitig an mehreren unterschiedlichen Messstellen jeweils mit einem oder mehreren Drucksensoren durchzuführen. In der Figur sind rein schematisch mögliche Messstellen zur Fülldruckerfassung jeweils durch einen als schwarzes Quadrat dargestellten Drucksensor 23 veranschaulicht.

So kann beispielsweise ein Drucksensor 23 in eine Bandabstützung 47 für das die untere Formfläche 15 bereitstellende Endlosband des Bandförderers 29 integriert sein.

Alternativ oder zusätzlich ist es möglich, einen Drucksensor 23 in die Füllplatte 41 zu integrieren, und zwar unmittelbar an der Füllöffnung 27.

Des Weiteren ist es alternativ oder zusätzlich möglich, zumindest einen Drucksensor 23 mit Abstand von der Füllöffnung 27 im Bereich der oberen Formfläche 13 zu positionieren. Beispielsweise können mehrere Drucksensoren 23 um die Füllöffnung 27 herum angeordnet sein.

Ferner ist es alternativ oder zusätzlich möglich, einen oder mehrere Drucksensoren 23 außerhalb der Füllplatte 41 am oder im Füllrohr 39 anzuordnen. Die Messstelle kann beispielsweise entweder nahe an der Füllplatte 41 oder nahe an der Füllmaschine 21 liegen, wie es jeweils exemplarisch in der Figur dargestellt ist.

Des Weiteren kann alternativ oder zusätzlich vorgesehen sein, dass ein oder mehrere Drucksensoren 23 innerhalb der Füllmaschine 21 angeordnet sind, und zwar beispielsweise in deren Ausgabebereich, wo die Hackfleischmasse in das angeschlossene Füllrohr 39 gegeben wird.

Der oder die in einer jeweiligen konkreten Ausgestaltung vorgesehenen Drucksensoren 23 sind ebenfalls mit der zentralen Steuereinrichtung 25 in der Füllmaschine 21 verbunden. Die Steuereinrichtung 25 wertet die Signale der Drucksensoren 23 im Rahmen der vorstehend erwähnten Regelung des Fülldrucks aus und steuert dabei über die Steuerung 18 der Hubeinheit deren Antriebseinheiten 17 an, um den Abstand zwischen den Formflächen 13, 15 entsprechend dem jeweils vorgegebenen Ziel der Regelung zu verändern, also entsprechend einem jeweils vorgegebenen Algorithmus. Eine hohe Reaktionsgeschwindigkeit sowohl bei der Auswertung der Signale des oder der Drucksensoren 23 als auch im Bereich der Hubeinheit und deren Antriebseinheiten 17 ist dabei sichergestellt. Im Rahmen der erfindungsgemäßen Regelung liegen die Reaktionszeiten der einzelnen elektronischen, elektromechanischen sowie der in die Regelung einbezogenen mechanischen Komponenten im Bereich einiger Millisekunden, denn gemäß einer bevorzugten Betriebsweise der Vorrichtung steht für die Herstellung eines Formlings 11 lediglich ein Zeitfenster von wenig mehr als einer Sekunden zur Verfügung.

Im Betrieb der erfindungsgemäßen Anlage werden von einem Bediener die Parameter der jeweils gewünschten Formlinge 11 an der Bedieneinheit 33 eingegeben, beispielsweise das Gewicht und die gewünschte Dicke des Formlings 11, woraus sich unter Berücksichtigung der bekannten durchschnittlichen Dichte des jeweiligen Rohstoffs, beispielsweise also der zur Herstellung von Hackfleischscheiben für Dönerspieße verwendeten Hackfleischmasse, der Durchmesser des Formlings 11 ergibt. Alternativ kann der Bediener an der Bedieneinheit 33 ein vorgegebenes Programm abrufen, in welchem die betreffenden Parameter des Formlings 11 hinterlegt sind.

Vor jedem einzelnen Füllvorgang wird die untere Formfläche 15 auf eine vorgegebene Ausgangshöhe gefahren, in welcher der Abstand zwischen den beiden Formflächen 13, 15 beispielsweise 10 mm beträgt, was in einer bevorzugten Auslegung der Anlage kleiner oder gleich der kleinsten mit der Anlage zu produzierenden Scheibendicke ist.

Mit Beginn des Füllvorgangs wird die untere Formfläche 15 abgesenkt, und zwar im Rahmen einer möglichen Regelung beispielsweise derart, dass der Fülldruck während des Füllvorgangs auf einem konstanten Sollwert von beispielsweise ungefähr 5 bar gehalten wird, der sowohl im Füllrohr 39 als auch in der Füllöffnung 27, d.h. an der Füllplatte 41 herrscht. Der auf die Bandabstützung 47 wirkende Druck kann geringer sein, was von der Regelung zu berücksichtigen ist, wenn alternativ oder zusätzlich der Fülldruck an der Bandabstützung 47 gemessen wird. In Abhängigkeit von den jeweiligen Gegebenheiten und den Eigenschaften des Rohstoffes kann der Sollwert für den Fülldruck auch mehr als die vorstehend lediglich als Beispiel genannten 5 bar betragen, z.B. mehr als 10 bar oder auch mehr als 20 bar. Es ist dabei nicht ausgeschlossen, dass der Sollwert für manche Anwendungen auch weniger als 5 bar betragen kann.

Die Regelung sorgt dafür, dass sich das Förderband 29 während des Füllvorgangs derart auf- und/oder abbewegt, dass der Fülldruck auf dem gewünschten konstanten Wert gehalten wird. Dabei ist es möglich, dass sich das Förderband 29 während des Füllvorgangs kontinuierlich von der erwähnten Ausgangshöhe von z.B. 10 mm bis zur gewünschten Scheibendicke von z.B. 50 mm absenkt, ohne dass die Abwärtsbewegung des Förderband 29 vorübergehend angehalten oder das Förderband 29 vorübergehend angehoben wird.

Auf diese Weise ist gewährleistet, dass der Rohstoff gleichmäßig zwischen die beiden Formflächen 13, 15 strömt und der Formling 11 homogen ausgebildet wird. Wie eingangs bereits erwähnt, lassen sich durch das erfindungsgemäße Konzept optimal ausgebildete Formlinge 11 herstellen, die insbesondere ohne Rissbildungen in den Randbereichen Durchmesser und Dicken aufweisen können, die oberhalb dessen liegen, was derzeit maschinell produziert werden kann. Beispielsweise für Dönerspieße vorgesehene Hackfleischscheiben mit einem Durchmesser von ungefähr 400 mm und einer Dicke von etwa 50 mm und mehr lassen sich erfindungsgemäß ohne Rissbildungen in den Randbereichen herstellen.

Die erfindungsgemäße Regelung verhindert somit einen zu niedrigen Fülldruck, der dazu führen würde, dass der Formling 11 nicht ausreichend dicht gepackt ist und dazu neigt, auseinanderzufallen. Ein zu hoher Fülldruck dagegen könnte zu einer Beeinträchtigung des Rohstoffes im Sinne einer mechanischen Schädigung beim Austreten aus der Füllöffnung 27 führen.

Durch die erfindungsgemäße Regelung wird insbesondere dafür gesorgt, dass Druckspitzen während des Füllvorgangs vermieden werden. Hierbei ist zu berücksichtigen, dass der mechanische Widerstand, den die unter Druck stehende Masse während des Füllvorgangs erfährt, im Laufe des Füllvorgangs in relativ kurzer Zeit stark ansteigen kann. Dem wird durch die Erfindung Rechnung getragen, indem das Förderband 29 in Abhängigkeit von dem gemessenen Fülldruck abgesenkt wird, wenn der Fülldruck den vorgegebenen Sollwert übersteigt. Eine über ein tolerierbares Maß hinausgehende Erhöhung des Fülldrucks wird gewissermaßen also dort abgefangen, wo sie entsteht, nämlich in dem Zwischenraum zwischen den beiden Formflächen 13, 15.

Das Förderband 29 und der Hubtisch 47 sowie die Antriebseinheiten 17 sind derart stabil ausgeführt, dass die während des Füllvorgangs aufgebrachten Kräfte problemlos aufgenommen werden können. Hierbei ist zu berücksichtigen, dass beispielsweise bei einem Fülldruck von etwa 5 bar Kräfte von bis zu 3.000 N auftreten können. Diese Parameter sind rein beispielhaft zu verstehen und sollen die Größenordnung veranschaulichen, die in der Praxis auftreten kann. Die konkreten Werte für den Fülldruck und die dabei auftretenden, auf einzelne Komponenten wirkenden Kräfte können in Abhängigkeit von der jeweiligen Anwendung zum Teil auch stark variieren und von den oben genannten Werten nach oben und nach unten abweichen. Die Antriebseinheiten 17, insbesondere dabei eingesetzte Motoren und Bremsen, sind folglich so ausgelegt, dass auch bei derart hohen Krafteinwirkungen während eines Füllvorgangs die untere Formfläche 15 in der jeweils durch die Regelung vorgegebenen Höhenposition gehalten bzw. entsprechend der Regelung angehoben bzw. abgesenkt werden kann.

Die Antriebseinheiten 17 können beispielsweise jeweils einen Servomotor mit Planetengetriebe und nachgeschaltetem Kurbeltrieb aufweisen. Eine Erhöhung des Fülldrucks kann bei entsprechender Ausgestaltung des Hubantriebs 17 zu einer erhöhten Stromaufnahme der Servomotoren führen. Diese erhöhte Stromaufnahme kann durch die Steuerung 18 des Antriebs 17 erkannt und als ein Maß für eine Veränderung des Fülldrucks an die zentrale Steuereinrichtung 25 gegeben werden. Die Messung des Fülldrucks kann in einer möglichen Ausgestaltung der Erfindung ausschließlich über die Antriebsmotorsteuerung erfolgen, sodass auf Messsensoren z.B. im Bereich des Füllkopfes, wie sie vorstehend erwähnt und in der Figur dargestellt sind, verzichtet werden kann.

Um einen fertigen Formling 11 von der Füllplatte 41, also von der oberen Formfläche 13, zu trennen, ist die vorstehend bereits erwähnte Trenneinrichtung beispielsweise in Form eines bewegbaren Messers vorgesehen. Das Messer wird wirksam, sobald das Förderband 29 gegenüber der feststehenden Füllplatte 41 während des Füllvorgangs derart weit abgesenkt ist, dass die gewünschte Scheibendicke erreicht ist.

Sobald der Formling 11 auf diese Weise von der Füllplatte 41 gelöst ist, wird das Förderband 29 weiter abgesenkt, bis die untere Formfläche 15, also das obere Trum 37 des Förderbands 29, in einer Ebene mit dem oberen Trum eines nachgeordneten Förderbandes 31 liegt. Dieses Förderband 31 kann als nachgeschaltete Einrichtung fertige Formlinge 11 übernehmen, indem die beiden Förderbänder 29, 31 entsprechend angetrieben werden.

Als Antriebe für die Endlosbänder können beispielsweise sogenannte Trommelmotoren 49 verwendet werden, die in die Umlenktrommeln der Endlosbänder eingesetzt sind.

### Bezugszeichenliste

- 11: Formling
- 13: obere Formfläche
- 15: untere Formfläche
- 17: Antriebseinheit des Antriebs
- 18: Steuerung des Antriebs
- 19: Zufuhreinrichtung
- 21: Fülleinrichtung, Ausgabeeinrichtung, Füllmaschine
- 23: Messeinrichtung, Drucksensor
- 25: Steuereinrichtung
- 27: Füllöffnung
- 29: Fördereinrichtung, Förderband
- 31: nachgeschaltete Einrichtung, Förderband
- 33: Bedieneinheit
- 35: Einfülltrichter
- 37: oberes Trum
- 39: Füllrohr
- 41: Füllplatte
- 43: Basis
- 45: Hubtisch
- 47: Bandabstützung
- 49: Trommelmotor

## Patentansprüche

1. Verfahren zur Herstellung von scheibenförmigen Formlingen (11) aus Portionen einer zähfließenden Masse, insbesondere von Hackfleischscheiben für Drehfleischspieße, von Hamburgern oder von aus fleischlosen oder veganen Rohstoffen bestehenden Formlingen, bei dem jeweils die Masse einer Portion unter Druck zwischen zwei voneinander beabstandete Formflächen (13, 15) gefüllt und während des Füllvorgangs der Abstand zwischen den Formflächen (13, 15) in Abhängigkeit von dem Fülldruck verändert wird,
**dadurch gekennzeichnet,**
**dass** in einem Regelkreis der Fülldruck oder ein Maß für den Fülldruck als Istwert gemessen, mit einem vorgegebenen Sollwert verglichen und durch Verändern des Abstands zwischen den Formflächen (13, 15) beeinflusst wird, wobei zum Verändern des Abstands die Formflächen (13, 15) mittels zumindest eines gesteuerten Antriebs (17) relativ zueinander bewegt werden.

2. Verfahren nach Anspruch 1,
wobei der Abstand bis zum Erreichen einer jeweils gewünschten Scheibendicke vergrößert wird, und/oder wobei der Abstand ausgehend von einem Wert, der kleiner ist als die jeweils gewünschte Scheibendicke, insbesondere ausgehend von einem Wert von etwa 10mm, auf einen zumindest im Wesentlichen der jeweils gewünschten Scheibendicke entsprechenden Wert vergrößert wird.

3. Verfahren nach Anspruch 1 oder 2,
wobei der Abstand automatisch verändert wird.

4. Verfahren nach einem der vorhergehenden Ansprüche,
wobei der Fülldruck oder ein Maß für den Fülldruck an einer der Formflächen (13, 15), an einem Antrieb (17) für eine der Formflächen (13, 15), an einer Zufuhreinrichtung (19) für die Masse und/oder an einer Fülleinrichtung (21) für die Masse gemessen wird, insbesondere wobei als ein Maß für den Fülldruck eine Last gemessen wird, die auf einen Antrieb (17) für eine der Formflächen (13, 15) wirkt, wobei insbesondere die Last als eine Stromaufnahme des Antriebs und/oder als ein auf den Antrieb (17) wirkendes Drehmoment und/oder als eine auf den Antrieb (17) wirkende Kraft gemessen wird.

5. Verfahren nach einem der vorhergehenden Ansprüche,
wobei der Sollwert für den Fülldruck während des Füllvorgangs konstant ist oder in Abhängigkeit von dem Abstand, der Füllmenge oder der Füllzeit variiert, und/oder wobei der Abstand nach Erreichen einer jeweils gewünschten Scheibendicke weiter vergrößert wird, und/oder wobei während des Füllvorgangs eine untere Formfläche (15) relativ zu einer oberen, insbesondere feststehenden, Formfläche (13) bewegt und nach Erreichen einer jeweils gewünschten Scheibendicke auf ein Abtransportniveau abgesenkt wird.

6. Verfahren nach einem der vorhergehenden Ansprüche,
wobei zumindest ein die Scheiben (11) betreffender Parameter, insbesondere die Scheibendicke, der Scheibendurchmesser oder das Scheibengewicht, und/oder zumindest ein das Verändern des Abstands betreffender Parameter aus einem Speicher und/oder aus einer Steuereinrichtung (25), abgerufen wird, und/oder wobei zumindest ein die Scheiben (11) betreffender Parameter, insbesondere die Scheibendicke, der Scheibendurchmesser oder das Scheibengewicht, und/oder zumindest ein das Verändern des Abstands betreffender Parameter variiert wird.

7. Verfahren nach Anspruch 6,
wobei eine Abfolge von Scheiben (11) hergestellt wird, von der sich zumindest zwei Scheiben (11) hinsichtlich wenigstens eines Parameters voneinander unterscheiden, wobei insbesondere die Scheiben (11) der Abfolge zur Bildung eines Drehfleischspießes oder eines anderen Gesamtgebildes hergestellt werden, in welchem sich, bevorzugt unmittelbar, aufeinander folgende Scheiben (11) hinsichtlich des Scheibendurchmessers und/oder der Scheibendicke voneinander unterscheiden, wobei bevorzugt die Abfolge zumindest hinsichtlich des jeweiligen Parameters frei vorab konfiguriert werden kann.

8. Vorrichtung zur Herstellung von scheibenförmigen Formlingen (11) aus Portionen einer zähfließenden Masse, insbesondere von Hackfleischscheiben für Drehfleischspieße, zur Durchführung des Verfahrens nach einem der vorhergehenden Ansprüche, mit
- zwei voneinander beabstandeten Formflächen (13, 15), die zum Verändern des Abstands zwischen den Formflächen (13, 15) relativ zueinander bewegbar sind,
- einer Zufuhreinrichtung (19), über welche jeweils die Masse einer Portion unter Druck zwischen die Formflächen (13, 15) gefüllt werden kann,
- einer Messeinrichtung (23) zum Messen des Fülldrucks oder eines Maßes für den Fülldruck, und
- einer Steuereinrichtung (25), die dazu ausgebildet ist, während eines jeweiligen Füllvorgangs den Abstand zwischen den Formflächen (13, 15) in Abhängigkeit von dem Fülldruck zu verändern, indem die Formflächen (13, 15) mittels eines von der Steuereinrichtung (25) gesteuerten Antriebs (17) relativ zueinander bewegt werden.

9. Vorrichtung nach Anspruch 8,
wobei wenigstens eine der Formflächen (13, 15) zumindest eine Füllöffnung (27) aufweist, über welche die Zufuhreinrichtung (19) mit dem Zwischenraum zwischen den Formflächen (13, 19) in Verbindung steht.

10. Vorrichtung nach Anspruch 8 oder 9,
wobei die Messeinrichtung (23) an einer der Formflächen (13, 15) angeordnet ist, und/oder wobei die Messeinrichtung an der Zufuhreinrichtung (19) angeordnet ist, und/oder wobei zumindest eine der Formflächen (13, 15) mittels eines elektrischen Antriebs (17) verfahrbar und die Messeinrichtung (23) dem Antrieb (17) oder einer Steuerung (18) des Antriebs (17) zugeordnet ist.

11. Vorrichtung nach einem der Ansprüche 8 bis 10,
wobei der Abstand ausgehend von einem Wert, der kleiner ist als die jeweils gewünschte Scheibendicke, insbesondere ausgehend von einem Wert von etwa 10mm, vergrößerbar ist, und/oder wobei der Abstand auf einen Wert vergrößerbar ist, der größer ist als die jeweils gewünschte Scheibendicke.

12. Vorrichtung nach einem der Ansprüche 8 bis 11,
wobei eine obere Formfläche (13) feststehend und eine untere Formfläche (15) relativ zu der oberen Formfläche (13) absenkbar und anhebbar ist, und/oder wobei eine untere Formfläche (15) als Auflage ausgebildet ist, auf welcher jeweils während des Füllvorgangs die Masse und nach dem Füllvorgang der Formling (11) aufliegt, und/oder wobei eine untere Formfläche (15) von einer Fördereinrichtung (29), insbesondere als Förderband, gebildet ist, mit der nach dem Füllvorgang der Formling (11) an eine nachgeschaltete Einrichtung (31) übergeben werden kann.

13. Anlage zur Herstellung von scheibenförmigen Formlingen (11) aus Portionen einer zähfließenden Masse, insbesondere von Hackfleischscheiben für Drehfleischspieße, von Hamburgern oder von aus fleischlosen oder veganen Rohstoffen bestehenden Formlingen,
mit einer Vorrichtung nach einem der Ansprüche 8 bis 12 und mit einer Ausgabeeinrichtung (21), insbesondere einer Füllmaschine, bevorzugt einer Flügelzellenfüllmaschine oder eine Kolbenfüllmaschine, zum Ausgeben der Masse.

## Claims

1. A method of producing slice-shaped moldings (11) from portions of a viscous mass, in particular minced meat slices for rotating meat spits, hamburgers or moldings composed of meatless or vegan raw materials, in which the respective mass of a portion is filled under pressure between two mutually spaced apart mold surfaces (13, 15) and the spacing between the mold surfaces (13, 15) is changed during the filling process in dependence on the filling pressure,
**characterized in that**,
in a control loop, the filling pressure or a measure for the filling pressure is measured as an actual value, compared with a predefined desired value and influenced by changing the spacing between the mold surfaces (13, 15), with the mold surfaces (13, 15) being moved relative to one another by means of at least one controlled drive (17) in order to change the spacing.

2. A method in accordance with claim 1,
wherein the spacing is increased up to the reaching of a respective desired slice thickness, and/or wherein the spacing, starting from a value which is smaller than the respective desired slice thickness, in particular starting from a value of approximately 10 mm, is increased to a value which at least substantially corresponds to the respective desired slice thickness.

3. A method in accordance with claim 1 or claim 2,
wherein the spacing is automatically changed.

4. A method in accordance with any one of the preceding claims,
wherein the filling pressure or a measure for the filling pressure is measured at one of the mold surfaces (13, 15), at a drive (17) for one of the mold surfaces (13, 15), at a feed device (19) for the mass and/or at a filling device (21) for the mass, in particular with a load which acts on a drive (17) for one of the mold surfaces (13, 15) being measured as a measure for the filling pressure, with in particular the load being measured as a power consumption of the drive and/or as a torque acting on the drive (17) and/or as a force acting on the drive (17).

5. A method in accordance with any one of the preceding claims,
wherein the desired value for the filling pressure is constant during the filling process or varies in dependence on the spacing, the filling quantity or the filling time, and/or wherein the spacing is further increased after reaching a respective desired slice thickness, and/or wherein a lower mold surface (15) is moved relative to an upper mold surface (13), in particular a fixed upper mold surface (13), during the filling process and is lowered to a transporting-away level after reaching a respective desired slice thickness.

6. A method in accordance with any one of the preceding claims,
wherein at least one parameter relating to the slices (11), in particular the slice thickness, the slice diameter or the slice weight, and/or at least one parameter relating to the changing of the spacing is/are called up from a memory and/or from a control device (25), and/or wherein at least one parameter relating to the slices (11), in particular the slice thickness, the slice diameter or the slice weight, and/or at least one parameter relating to the changing of the spacing is/are varied.

7. A method in accordance with claim 6,
wherein a sequence of slices (11) is produced of which at least two slices (11) differ from one another with respect to at least one parameter, with in particular the slices (11) of the sequence being produced to form a rotating meat spit or another overall structure in which slices (11) following one another, preferably directly following one another, differ from one another with respect to the slice diameter and/or the slice thickness, with preferably the sequence being able to be freely configured in advance at least with respect to the respective parameter.

8. An apparatus for producing slice-shaped moldings (11) from portions of a viscous mass, in particular minced meat slices for rotating meat spits, for carrying out the method in accordance with any one of the preceding claims, said apparatus comprising
- two mold surfaces (13, 15) which are spaced apart from one another and which are movable relative to one another to change the spacing between the mold surfaces (13, 15);
- a feed device (19) via which the respective mass of a portion can be filled under pressure between the mold surfaces (13, 15);
- a measurement device (23) for measuring the filling pressure or a measure for the filling pressure; and
- a control device (25) which is configured to change the spacing between the mold surfaces (13, 15) during a respective filling process in dependence on the filling pressure by moving the mold surfaces (13, 15) relative to one another by means of a drive (17) controlled by the control device (25).

9. An apparatus in accordance with claim 8,
wherein at least one of the mold surfaces (13, 15) has at least one filling opening (27) via which the feed device (19) is in connection with the intermediate space between the mold surfaces (13, 19).

10. An apparatus in accordance with claim 8 or claim 9,
wherein the measurement device (23) is arranged at one of the mold surfaces (13, 15), and/or wherein the measurement device is arranged at the feed device (19), and/or wherein at least one of the mold surfaces (13, 15) can be moved by means of an electric drive (17) and the measurement device (23) is associated with the drive (17) or a control (18) of the drive (17).

11. An apparatus in accordance with any one of the claims 8 to 10,
wherein the spacing can be increased, starting from a value which is smaller than the respective desired slice thickness, in particular starting from a value of approximately 10mm, and/or wherein the spacing can be increased to a value which is greater than the respective desired slice thickness.

12. An apparatus in accordance with any one of the claims 8 to 11,
wherein an upper mold surface (13) is fixed and a lower mold surface (15) can be lowered and raised relative to the upper mold surface (13), and/or wherein a lower mold surface (15) is formed as a support on which the mass lies during the filling process and on which the molding (11) lies after the filling process respectively, and/or wherein a lower mold surface (15) is formed by a conveying device (29), in particular as a conveyor belt, by which the molding (11) can be transferred to a device (31) connected downstream after the filling process.

13. A system for producing slice-shaped moldings (11) from portions of a viscous mass, in particular minced meat slices for rotating meat spits, hamburgers or moldings composed of meatless or vegan raw materials, said system comprising an apparatus in accordance with any one of the claims 8 to 12, and an output device (21), in particular a filling machine, preferably a vane filling machine or a piston filling machine, for outputting the mass.

## Revendications

1. Procédé pour réaliser des produits moulés (11) en forme de tranches à partir de portions d'une masse visqueuse, en particulier des tranches de viande hachée pour des broches de viande tournantes, des hamburgers ou des produits moulés constitués de matières premières sans viande ou végétaliennes,
dans lequel la masse d'une portion respective est versée sous pression entre deux surfaces de moule (13, 15) espacées l'une de l'autre, et, pendant l'opération de versement, la distance entre les surfaces de moule (13, 15) est modifiée en fonction de la pression de versement,
**caractérisé en ce que**
dans un circuit d'asservissement, la pression de versement ou une grandeur de la pression de versement est mesurée en tant que valeur réelle, comparée à une valeur de consigne prédéterminée et influencée par la modification de la distance entre les surfaces de moule (13, 15), et
pour modifier la distance, les surfaces de moule (13, 15) sont déplacées l'une par rapport à l'autre au moyen d'au moins un entraînement commandé (17).

2. Procédé selon la revendication 1,
dans lequel la distance est augmentée jusqu'à ce qu'une épaisseur de tranche respective souhaitée soit atteinte, et/ou
la distance est augmentée à partir d'une valeur qui est inférieure à l'épaisseur de tranche respective souhaitée, en particulier à partir d'une valeur d'environ 10 mm, jusqu'à une valeur correspondant au moins sensiblement à l'épaisseur de tranche respective souhaitée.

3. Procédé selon la revendication 1 ou 2,
dans lequel la distance est modifiée automatiquement.

4. Procédé selon l'une des revendications précédentes,
dans lequel la pression de versement ou une grandeur de la pression de versement est mesurée sur l'une des surfaces de moule (13, 15), sur un entraînement (17) pour l'une des surfaces de moule (13, 15), sur un moyen d'alimentation (19) de la masse et/ou sur un moyen de versement (21) de la masse,
en particulier, une charge agissant sur un entraînement (17) pour l'une des surfaces de moule (13, 15) est mesurée comme grandeur de la pression de versement, la charge étant en particulier mesurée comme consommation de courant de l'entraînement et/ou comme couple de rotation agissant sur l'entraînement (17) et/ou comme force agissant sur l'entraînement (17).

5. Procédé selon l'une des revendications précédentes,
dans lequel la valeur de consigne pour la pression de versement est constante pendant l'opération de versement ou varie en fonction de la distance, de la quantité de versement ou du temps de versement, et/ou la distance est encore augmentée après avoir atteint une épaisseur de tranche respective souhaitée, et/ou
pendant l'opération de versement, une surface de moule inférieure (15) est déplacée par rapport à une surface de moule supérieure (13), en particulier fixe, et est abaissée à un niveau d'extraction après avoir atteint une épaisseur de tranche respective souhaitée.

6. Procédé selon l'une des revendications précédentes,
dans lequel au moins un paramètre relatif aux tranches (11), en particulier à l'épaisseur de tranche, au diamètre de tranche ou au poids de tranche, et/ou au moins un paramètre relatif à la modification de la distance est appelé à partir d'une mémoire et/ou d'un moyen de commande (25), et/ou au moins un paramètre relatif aux tranches (11), en particulier à l'épaisseur de tranche, au diamètre de tranche ou au poids de tranche, et/ou au moins un paramètre relatif à la modification de la distance est varié.

7. Procédé selon la revendication 6,
dans lequel une séquence de tranches (11) est produite, dont au moins deux tranches (11) diffèrent l'une de l'autre en ce qui concerne au moins un paramètre,
en particulier les tranches (11) de la séquence sont produites pour former une broche de viande tournante ou une autre structure globale dans laquelle des tranches (11) qui se suivent de préférence directement diffèrent les unes des autres en ce qui concerne le diamètre de tranche et/ou l'épaisseur de tranche, et
de préférence, la séquence peut être librement configurée à l'avance au moins en ce qui concerne le paramètre respectif.

8. Dispositif pour réaliser des produits moulés (11) en forme de tranches à partir de portions d'une masse visqueuse, en particulier des tranches de viande hachée pour broches de viande tournantes, pour mettre en oeuvre le procédé selon l'une des revendications précédentes, comprenant
- deux surfaces de moule (13, 15) espacées l'une de l'autre qui peuvent être déplacées l'une par rapport à l'autre afin de faire varier la distance entre les surfaces de moule (13, 15),
- un moyen d'alimentation (19) à l'aide duquel la masse d'une portion respective peut être versée sous pression entre les surfaces de moule (13, 15),
- un moyen de mesure (23) pour mesurer la pression de versement ou une grandeur de la pression de versement, et
- un moyen de commande (25) qui est réalisé pour faire varier la distance entre les surfaces de moule (13, 15) en fonction de la pression de versement pendant une opération de versement respective du fait que les surfaces de moule (13, 15) sont déplacées l'une par rapport à l'autre à l'aide d'un entraînement (17) commandé par le moyen de commande (25).

9. Dispositif selon la revendication 8,
dans lequel l'une au moins des surfaces de moule (13, 15) présente au moins une ouverture de versement (27) via laquelle le moyen d'alimentation (19) communique avec l'espace intermédiaire entre les surfaces de moule (13, 19).

10. Dispositif selon la revendication 8 ou 9,
dans lequel le moyen de mesure (23) est disposé sur l'une des surfaces de moule (13, 15), et/ou
le moyen de mesure est disposé sur le moyen d'alimentation (19), et/ou l'une au moins des surfaces de moule (13, 15) est déplaçable à l'aide d'un entraînement électrique (17) et le moyen de mesure (23) est associé à l'entraînement (17) ou à une commande (18) de l'entraînement (17).

11. Dispositif selon l'une des revendications 8 à 10,
dans lequel la distance peut être augmentée à partir d'une valeur qui est inférieure à l'épaisseur de tranche respective souhaitée, en particulier à partir d'une valeur d'environ 10 mm, et/ou
la distance peut être augmentée jusqu'à une valeur qui est supérieure à l'épaisseur de tranche respective souhaitée.

12. Dispositif selon l'une des revendications 8 à 11,
dans lequel une surface de moule supérieure (13) est fixe et une surface de moule inférieure (15) peut être abaissée et relevée par rapport à la surface de moule supérieure (13), et/ou
une surface de moule inférieure (15) est réalisée sous forme de support sur lequel repose la masse pendant l'opération de versement et sur lequel repose le produit moulé (11) après l'opération de versement, respectivement, et/ou
une surface de moule inférieure (15) est constituée par un moyen de transport (29), en particulier sous la forme d'une bande transporteuse, à l'aide duquel le produit moulé (11) peut être transféré à un moyen (31) en aval, après l'opération de versement.

13. Installation pour réaliser des produits moulés (11) en forme de tranches à partir de portions d'une masse visqueuse, en particulier des tranches de viande hachée pour des broches de viande tournantes, des hamburgers ou des produits moulés constituée de matières premières sans viande ou végétaliennes,
comportant un dispositif selon l'une des revendications 8 à 12 et un moyen de distribution (21), en particulier une machine de versement, de préférence une machine de versement à palettes ou une machine de versement à piston, pour distribuer la masse.
